# DEMANDE DE BREVET EUROPEEN

(11) **EP 0 736 717 A1**
(43) Date de publication de la demande: **09.10.1996**
(21) Numéro de dépôt: 96400744.7
(22) Date de dépôt: 05.04.1996
(51) Int. Cl.: F16L 41/00, F28F 9/04, F28F 9/06, F28F 21/06

(54) **Dispositif de raccordement étanche pour circuit hydraulique**

(30) Priorité: 07.04.1995 FR 9504154
(71) Demandeur: REGIE NATIONALE DES USINES RENAULT S.A., 92109 Boulogne Billancourt (FR)
(72) Inventeur: Deruyter, Emmanuel, 78700 Conflans Saint-Honorine (FR)
(74) Mandataire: Fernandez, Francis Lionel

(57) **Abrégé**

Dispositif de raccordement étanche pour circuit hydraulique du type comportant un organe à raccorder (2) sur lequel vient se fixer un conduit à raccorder (6) avec interposition d'un joint d'étanchéité (1) destiné à être comprimé entre les plans de joint du corps (2) et de la bride de fixation (62) du conduit à raccorder (6), caractérisé en ce que ledit organe à raccorder (2) présente une pièce femelle (21) adaptée pour recevoir la partie d'embout mâle (61) correspondante dudit conduit à raccorder (6) et en ce que ledit joint d'étanchéité (1) présente au droit de cette pièce femelle (21) un opercule (16) destiné à être déchiré par ladite partie d'embout mâle (61) dudit conduit à raccorder (6) lors de sa mise en place dans ladite pièce femelle correspondante dudit organe à raccorder (2).

## Description

La présente invention concerne un dispositif de raccordement étanche pour un circuit hydraulique, comprenant notamment une pièce femelle solidaire d'un organe à raccorder, une pièce mâle ou embout solidaire d'un tube à raccorder et un joint d'étanchéité. L'invention concerne plus particulièrement un dispositif de raccordement étanche entre un organe tel qu'un corps de distribution hydraulique et un élément de conduit, ce dispositif de raccordement permettant d'obturer l'orifice de sortie du corps de distribution avant le branchement effectif du conduit.

Il est fréquent de devoir assurer la liaison entre un organe rempli de liquide et un conduit pour le transfert de ce liquide. L'opération de branchement du conduit, aussi rapide soit-elle, s'accompagne alors généralement de fuites de liquide qui peuvent s'avérer préjudiciables notamment en terme de pollution de l'environnement.

Ainsi pour refroidir l'huile de lubrification d'un moteur à combustion interne de véhicule automobile, il est connu, par exemple par les brevets FR-2.682.160, FR-2.679636 ou EP-526.687, d'utiliser un échangeur de type eau-huile ou air-huile s'étendant hors du moteur. La sortie de la pompe à huile est alors connectée à un corps ou boîtier de dérivation thermostaté fixé au carter-cylindres du moteur sur lequel viennent se raccorder les conduits du circuit de refroidissement de l'huile.

Lors du processus de mise en place du circuit de refroidissement, la fixation des conduits du circuit de refroidissement de l'huile est réalisée alors que le moteur est déjà entièrement assemblé et donc déjà rempli d'huile. Pour pouvoir brancher ces conduits, il est donc nécessaire de retirer la plaque obturatrice fermant les orifices du corps de dérivation qui avait été fixée préalablement au remplissage en huile du moteur et ensuite de connecter les tuyauteries au corps de dérivation avec interposition d'un joint d'étanchéité. Un tel processus présente donc l'inconvénient de requérir de nombreuses opérations et d'autre part d'entraîner des fuites d'huile plus ou moins importantes lors du retrait de la plaque obturatrice.

L'objet de la présente invention est donc de remédier aux inconvénients précités en proposant un dispositif de raccordement étanche de conception simple et qui élimine les écoulements de liquide hors de l'organe à raccorder lors du branchement du conduit à raccorder correspondant.

Le dispositif de raccordement étanche pour circuit hydraulique selon l'invention est du type comportant un organe à raccorder sur lequel vient se fixer un conduit à raccorder avec interposition d'un joint d'étanchéité destiné à être comprimé entre les plans de joint de l'organe à raccorder et de la bride de fixation du conduit à raccorder.

Selon l'invention, le dispositif de raccordement étanche pour circuit hydraulique est caractérisé en ce que l'organe à raccorder présente une pièce femelle adaptée pour recevoir la partie d'embout mâle correspondante du conduit et en ce que le joint d'étanchéité présente au droit de cette pièce femelle un opercule destiné à être déchiré par la partie d'embout mâle du conduit lors de sa mise en place dans la pièce femelle.

Selon une autre caractéristique du dispositif de raccordement étanche pour circuit hydraulique objet de l'invention, la pièce femelle portée par l'organe à raccorder est constituée par un alésage cylindrique dans lequel peut être logé l'embout mâle du conduit à raccorder.

Selon une autre caractéristique du dispositif de raccordement étanche pour circuit hydraulique objet de l'invention, l'opercule est prédécoupé dans sa partie centrale selon des lignes s'étendant radialement par rapport à son centre.

Selon une autre caractéristique du dispositif de raccordement étanche pour circuit hydraulique objet de l'invention, le joint d'étanchéité coopère avec des moyens de fixation pour être monté sur l'organe à raccorder et venir obturer la pièce femelle avant la fixation du conduit à raccorder.

Selon une autre caractéristique du dispositif de raccordement étanche pour circuit hydraulique objet de l'invention, les moyens de fixation du joint d'étanchéité comprennent un premier écrou et un goujon venant se bloquer dans un perçage taraudé correspondant usiné dans l'organe à raccorder.

Selon une autre caractéristique du dispositif de raccordement étanche pour circuit hydraulique objet de l'invention, la bride du conduit à raccorder est serrée contre le corps de dérivation au moyen d'un second écrou coopérant avec le goujon servant à la fixation du joint d'étanchéité.

Selon une autre caractéristique du dispositif de raccordement étanche pour circuit hydraulique objet de l'invention, le joint d'étanchéité est formé par une âme métallique comportant notamment une ouverture destinée à être traversée par la partie d'embout mâle du conduit à raccorder, cette âme métallique étant revêtue d'une couche de matériau élastique définissant l'opercule ainsi que des bourrelets d'étanchéité s'étendant en saillie sur les deux faces d'appui du joint.

Selon une autre caractéristique du dispositif de raccordement étanche pour circuit hydraulique objet de l'invention, la couche de matériau élastique définit un bourrelet d'étanchéité annulaire s'étendant en saillie radiale à l'intérieur de l'ouverture pratiquée dans l'âme métallique pour recevoir la partie d'embout mâle du conduit à raccorder.

On comprendra mieux les buts, aspects et avantages de la présente invention, d'après la description donnée ci-après d'un mode de réalisation de l'invention, ce mode de réalisation étant donné à titre d'exemple non limitatif, en se référant aux dessins annexés, dans lesquels :
- la figure 1 est une vue en coupe partielle du dispositif de raccordement étanche selon l'invention ;
- la figure 2 est une vue similaire à celle de la figure 1, précisant le fonctionnement du dispositif ;
- la figure 3 est une vue de détail de l'opercule équipant le dispositif de raccordement étanche selon l'invention.

Conformément aux figures décrites ci-après seuls ont été représentés les éléments constitutifs du dispositif nécessaires à la compréhension de l'invention. Pour faciliter la lecture des dessins, les mêmes éléments portent les mêmes références d'une figure à l'autre.

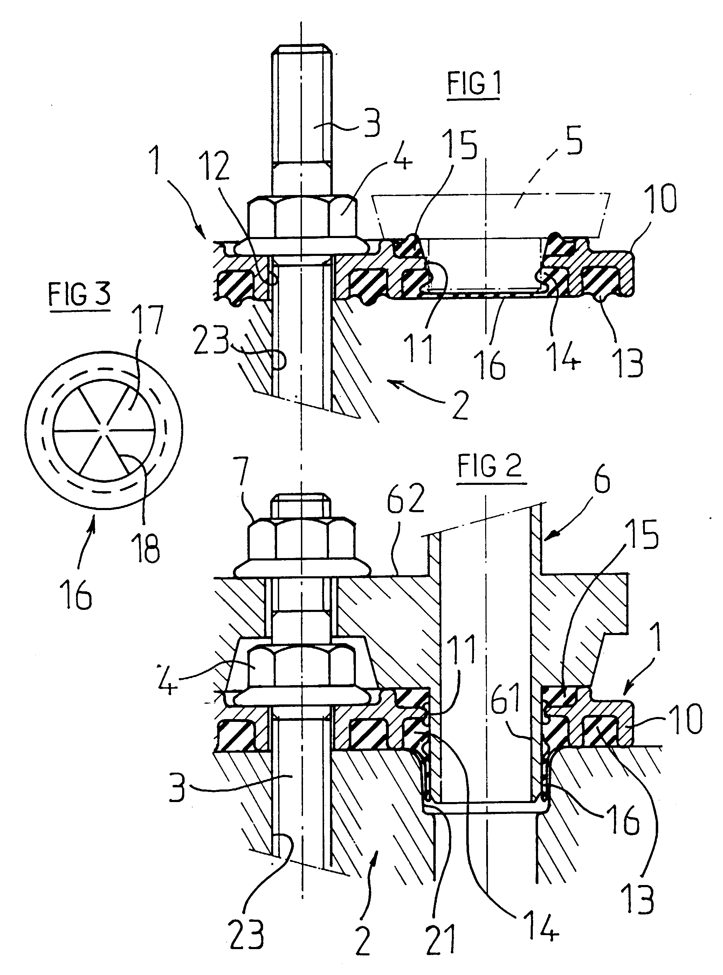

Sur les figures 1 et 2, on voit une partie d'extrémité d'un organe à raccorder 2 qui peut être par exemple un corps de distribution de l'huile de lubrification d'un moteur à combustion interne de véhicule automobile. Cet organe 2 est destiné à être connecté, après avoir été rempli de liquide, à un circuit hydraulique par l'intermédiaire d'un conduit 6.

Le dispositif de raccordement selon l'invention a donc pour objet d'assurer un montage étanche entre l'organe à raccorder 2 et le tube à raccorder 6 et d'éviter toute fuite de liquide lors du branchement effectif du conduit 6.

Pour ce faire, le dispositif de raccordement comprend essentiellement une pièce femelle solidaire de l'organe 2, cette pièce femelle étant constituée par un simple alésage cylindrique 21 usiné directement dans l'organe 2, une pièce mâle ou embout 61 s'étendant à l'extrémité du conduit à raccorder 6 et un joint d'étanchéité 1 destiné à être interposé entre l'organe à raccorder 2 et le conduit à raccorder 6.

L'embout 61 présente un corps sensiblement cylindrique, depuis son extrémité libre jusqu'au conduit 6 proprement dit, destiné à pouvoir être inséré dans l'alésage 21 de l'organe 2. Cet embout 61 est solidaire d'une bride de fixation 62 permettant d'immobiliser le conduit 6 sur l'organe 2.

Le joint 1, destiné à être interposé entre les plans de joint de l'organe 2 et de la bride de fixation 62 du conduit 6, est formé par une âme métallique 10, par exemple en alliage d'aluminium, qui en défini l'armature. Cette âme 10 comporte une ouverture 12 pour le passage d'un goujon de fixation 3 ainsi qu'une ouverture 11 destinée à s'étendre au droit de l'alésage 21 de l'organe à raccorder 2 et à recevoir l'extrémité d'embout 61 du conduit 6.

L'étanchéité proprement dite du joint 1 est produite par une couche de matériau élastique tel que du caoutchouc qui est vulcanisée sur l'armature. Cette couche de matériau élastique définit un opercule 16 recouvrant l'ouverture 11 ainsi que des lèvres ou bourrelets d'étanchéité 13,15 et 14 qui s'étendent en saillie sur les faces d'appui du joint 1 ainsi qu'à travers l'ouverture 11, au-dessus de l'opercule 16.

Ainsi grâce à la structure du joint d'étanchéité 1 qui vient d'être décrite, il est possible de serrer le joint 1 contre l'organe à raccorder 2 et d'obturer l'orifice de sortie de l'alésage 21, avant la fixation du conduit à raccorder 6.

Pour ce faire il suffit d'immobiliser le joint 1 contre l'organe à raccorder au moyen par exemple d'un écrou 4 vissé sur un goujon 3 de longueur prédéterminée qui s'étend à travers l'ouverture 12 pour venir se bloquer dans un perçage taraudé 23 correspondant usiné dans l'organe à raccorder 2. Le serrage de l'écrou 4 entraîne l'écrasement des bourrelets élastiques 13 s'étendant en regard de l'organe à raccorder 2, ce qui assure en même temps que la présence de l'opercule 16 une obturation parfaitement étanche de l'alésage 21. Il est donc alors possible, le joint 1 ayant été mis en place, de remplir cet organe 2 sans risque de fuite.

On peut prévoir, pour assurer une résistance améliorée de l'opercule 16 à la pression du liquide contenu dans l'organe à raccorder 2, de disposer une forme adaptée 5 pouvant venir se fixer à la partie du goujon 3 s'étendant au-dessus de l'écrou 4 et destinée à éviter toute déformation de l'opercule 16.

Le joint 1 étant en position contre l'organe à raccorder de façon à obturer l'alésage 21, la connexion du conduit à raccorder correspondant est alors simple et ne nécessite aucune opération de démontage si ce n'est celle de la forme 5. Il suffit de présenter l'embout 61 du conduit 6 au droit de l'ouverture 11 et de déchirer l'opercule 16 en enfonçant cet embout 61 dans l'alésage 21. La présence du bourrelet élastique annulaire 14 s'étendant en saillie radiale dans l'ouverture 11 avant l'opercule 16 et qui est destiné à reposer par ajustement serré contre l'embout 61 permet d'assurer l'étanchéité au liquide lors du perçage de l'opercule 16.

Le serrage de la bride de fixation 62 du conduit 6 contre le joint 1 au moyen d'un second écrou 7 vissé sur le goujon 3 s'étendant au-dessus de l'écrou 4, renforce encore l'étanchéité du montage en venant écraser les bourrelets élastiques 15 du joint 1 s'étendant en regard de la bride 62.

Pour faciliter le perçage de l'opercule 16, on peut, comme cela est représenté à la figure 3, opérer des prédécoupes dans sa partie centrale 17 sous forme de lignes 18 s'étendant radialement par rapport au centre de l'opercule 16.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif de raccordement étanche pour circuit hydraulique du type comportant un organe à raccorder (2) sur lequel vient se fixer un conduit à raccorder (6) avec interposition d'un joint d'étanchéité (1) destiné à être comprimé entre les plans de joint du corps (2) et de la bride de fixation (62) du conduit à raccorder (6), caractérisé en ce que ledit organe à raccorder (2) présente une pièce femelle (21) adaptée pour recevoir la partie d'embout mâle (61) correspondante dudit conduit à raccorder (6) et en ce que ledit joint d'étanchéité (1) présente au droit de cette pièce femelle (21) un opercule (16) destiné à être déchiré par ladite partie d'embout mâle (61) dudit conduit à raccorder (6) lors de sa mise en place dans ladite pièce femelle correspondante dudit organe à raccorder (2).

2. Dispositif de raccordement étanche pour circuit hydraulique selon la revendication 1, caractérisé en ce que la pièce femelle portée par ledit organe à raccorder (2) est constituée par un alésage cylindrique (21) dans lequel peut être logé ledit embout mâle (61) dudit conduit à raccorder (6).

3. Dispositif de raccordement étanche pour circuit hydraulique selon l'une quelconque des revendications 1 à 2, caractérisé en ce que ledit opercule (16) est prédécoupé dans sa partie centrale (17) selon des lignes (18) s'étendant radialement par rapport à son centre.

4. Dispositif de raccordement étanche pour circuit hydraulique selon l'une quelconque des revendications 1 à 3, caractérisé en ce que ledit joint d'étanchéité (1) coopère avec des moyens de fixation (3,4) pour être monté sur ledit organe à raccorder (2) et venir obturer ladite pièce femelle (21) avant la fixation du conduit à raccorder (6).

5. Dispositif de raccordement étanche pour circuit hydraulique selon la revendication 4, caractérisé en ce que lesdits moyens de fixation comprennent un premier écrou (4) et un goujon (3) venant se bloquer dans un perçage taraudé (23) correspondant usiné dans ledit organe à raccorder (2).

6. Dispositif de raccordement étanche pour circuit hydraulique selon la revendication 5, caractérisé en ce que ladite bride de fixation (62) dudit conduit à raccorder (6) est serrée contre ledit organe à raccorder (2), au moyen d'un second écrou (7) coopérant avec ledit goujon(3).

7. Dispositif de raccordement étanche pour circuit hydraulique selon l'une quelconque des revendications 1 à 6, caractérisé en ce que ledit joint d'étanchéité (1) est formé par une âme métallique (10) comportant notamment une ouverture (11) destinée à être traversée par ladite partie d'embout mâle (61) dudit conduit à raccorder (6), ladite âme métallique (10) étant revêtue d'une couche de matériau élastique définissant l'opercule (16) ainsi que des bourrelets d'étanchéité (13,15) s'étendant en saillie sur les deux faces d'appui dudit joint (1).

8. Dispositif de raccordement étanche pour circuit hydraulique selon la revendication 7, caractérisé en ce que ladite couche de matériau élastique définit un bourrelet d'étanchéité annulaire (14) s'étendant en saillie radiale à l'intérieur de ladite ouverture (11) au -dessus dudit opercule (16).
